## Europäisches Patentamt

## European Patent Office

## Office européen des brevets

(19)

(11) Numéro de publication : **0 343 054 B1**

# (12) FASCICULE DE BREVET EUROPEEN

(45) Date de publication du fascicule du brevet :
08.01.92 Bulletin 92/02

(51) Int. Cl.⁵ : **F16F 9/30, E01D 11/00**

(21) Numéro de dépôt : **89401336.6**

(22) Date de dépôt : **12.05.89**

(54) Perfectionnements aux dispositifs pour amortir les vibrations des haubans.

(30) Priorité : **16.05.88 FR 8806537**

(43) Date de publication de la demande :
**23.11.89 Bulletin 89/47**

(45) Mention de la délivrance du brevet :
**08.01.92 Bulletin 92/02**

(84) Etats contractants désignés :
**AT BE CH DE ES FR GB GR IT LI LU NL SE**

(56) Documents cités :
**DE-A- 3 434 620**
**FR-A- 1 562 514**
**TRAVAUX, vol. 595, Janvier 1985, pages 36-48,**
**Editions Science et Industrie S.A., Paris, FR; J.**
**COMBAULT et al.: "La construction de la pas-**
**serelle de l'Illhof (Bas-Rhin)"**

(73) Titulaire : **FREYSSINET INTERNATIONAL**
**(STUP)**
**52-54 rue de la Belle Feuille**
**F-92100 Boulogne (FR)**

(72) Inventeur : **De La Fuente, Carlos**
**17 Rue du Sergent Bobillot**
**F-92000 Nanterre (FR)**

(74) Mandataire : **Behaghel, Pierre et al**
**CABINET PLASSERAUD 84 rue d'Amsterdam**
**F-75009 Paris (FR)**

Jouve, 18, rue Saint-Denis, 75001 PARIS

## Description

L'invention concerne les dispositifs destinés à amortir les vibrations des haubans et en particulier celles des haubans qui équipent les ponts.

On sait que ces haubans sont soumis à des vibrations du fait du vent ou de la circulation des véhicules, et notamment des poids lourds, sur les ponts équipés desdits haubans.

Pour amortir de telles vibrations, il a déjà été proposé d'avoir recours à des dispositifs comprenant :

— un collier entourant un tronçon du hauban distant de quelques mètres de l'extrémité, de ce hauban, ancrée dans une fondation appropriée,

— et deux jambes de force inclinées incorporant des amortisseurs de vibrations interposés entre leurs extrémités, chaque ensemble composé par une jambe de force et l'amortisseur associé reliant le collier à un bloc d'ancrage noyé dans une fondation appropriée.

Dans les modes de réalisation connus des dispositifs considérés, les amortisseurs sont du type de ceux équipant les poids lourds, c'est-à-dire relativement coûteux et encombrants.

Il a également été proposé, dans le même but d'amortir les vibrations de haubans, d'entourer avec jeu l'extrémité inférieure, d'un tel hauban, ancrée dans une fondation, par un boîtier cylindrique lui-même ancré à sa base dans ladite fondation, l'intervalle annulaire compris entre le tronçon et le boîtier étant fermé à son extrémité supérieure par un soufflet étanche déformable et cet intervalle étant rempli de graisse (Travaux, vol. 595, page 41).

Lorsque le tronçon de hauban considéré est soumis à des vibrations transversales, il fait son trou dans la masse de graisse qui l'entoure en déformant le soufflet d'extrémité et l'expérience montre que l'amortissement résultant laisse à désirer.

L'invention a pour but, surtout, de proposer pour des dispositifs amortisseurs de vibrations de haubans une construction plus adaptée qui se révèle à la fois particulièrement efficace, esthétique et économique.

A cet effet, les amortisseurs de vibrations de haubans selon l'invention, ancrés à l'une au moins de leurs extrémités dans une fondation, sont essentiellement caractérisés en ce qu'ils comprennent un premier organe annulaire rigide entourant un tronçon du hauban, disposé à proximité de la fondation et solidarisé avec ledit tronçon, un second organe annulaire rigide monté sur le premier, avec formation entre eux d'une cavité annulaire, de façon à pouvoir se déplacer transversalement par rapport à ce premier organe annulaire, des joints d'étanchéité pratiquement indéformables interposés entre les deux organes annulaires de façon à assurer l'étanchéité de la cavité annulaire vis-à-vis de l'extérieur, un coussin en matériau fluable, mais de volume global constant, remplissant la cavité annulaire, et une structure rigide reliant le second organe annulaire à une fondation.

Dans des modes de réalisation intéressants, on a recours en outre à l'une et/ou à l'autre des dispositions suivantes :

— le premier organe annulaire est une gouttière présentant en demi-coupe axiale la forme d'un U à ailes transversales ouvert radialement vers l'extérieur et le second organe annulaire est un anneau logé dans la gorge de cette gouttière avec interposition de joints glissants,

— chacune des pièces annulaires est formée de deux moitiés semi-circulaires assemblées l'une contre l'autre avec éventuellement interposition de joints d'étanchéité appropriés,

— les joints d'étanchéité pratiquement indéformables comprennent des patins annulaires logés dans des rainures elles-mêmes évidées dans les faces transversales de l'anneau, ces patins étant appliqués axialement contre les faces intérieures des ailes transversales en regard de la gouttière, alors planes et de préférence polies,

— dans un amortisseur selon les deux alinéas précédents, l'anneau est composé de deux éléments annulaires coaxiaux s'entourant l'un l'autre et conformés de façon à réserver entre eux les rainures latérales, chaque rainure présentant une portion extérieure qui reçoit avec jeu radial un patin et une portion intérieure radialement plus étroite que la portion extérieure et garnie d'une bague en matériau élastomère qui y est écrasée radialement entre les deux éléments annulaires par suite du serrage assurant la fixation mutuelle des deux moitiés constitutives de l'élément annulaire externe, cet écrasement radial de la bague se traduisant par son expansion axiale qui applique les patins contre les faces en regard de la gouttière,

— dans un amortisseur selon l'alinéa qui précède le précédent, l'anneau présente en demi-section axiale la forme d'un U à ailes transversales ouvert radialement vers l'intérieur, les fonds des rainures sont évidés par des trous axiaux qui relient ces rainures à l'intérieur de l'anneau et les patins sont appliqués contre les faces en regard de la gouttière par la pression interne du matériau constitutif du coussin, par l'intermédiaire de successivement une rondelle intérieure en métal logée radialement avec jeu dans la rainure correspondante et une bague en élastomère écrasée radialement dans cette rainure,

— la cavité annulaire réservée entre la gouttière et l'anneau présente au moins un passage étranglé propre à entraver le fluage du matériau constitutif du coussin.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

La figure 1, de ces dessins, montre schématiquement de côté un amortisseur de vibrations de hauban conforme à l'invention monté sur le hauban correspondant.

La figure 2 est une vue selon la flèche II de la figure 1.

La figure 3 montre en demi-coupe axiale une portion d'un tel amortisseur.

La figure 4 est une vue en bout selon la flèche IV de la figure 3 et à échelle réduite de l'un des organes annulaires constitutifs d'un tel amortisseur.

Les figures 5 et 6 montrent, respectivement en demi-coupe axiale selon V-V, figure 6, et en demi-coupe transversale selon VI-VI, figure 5, une variante d'amortisseur également conforme à l'invention.

La figure 7 est une variante de la figure 1 encore conforme à l'invention.

On se propose ici d'amortir les vibrations transversales auxquelles sont soumis les haubans 1 d'un pont 2 en raison du vent ou de la circulation de véhicules sur ce pont.

Si en effet ces vibrations ne sont pas maîtrisées, elles peuvent engendrer des dommages, en particulier au niveau des raccordements de chaque hauban avec les suspentes du tablier du pont et surtout au niveau des ancrages du hauban, notamment si les vibrations considérées font intervenir un phénomène de résonance.

Pour amortir ces vibrations, on impose localement une charge amortissante à chaque hauban considéré, en au moins un emplacement P, de ce hauban, disposé à quelques mètres de son extrémité ancrée inférieure 3.

Cette extrémité inférieure est ancrée de toute façon désirable sur un bloc 4 qui est solidaire d'une fondation appropriée 5 telle que le sol ou que l'ossature même du pont 2.

A cet effet on entoure le tronçon du hauban 1 situé en P par une gouttière annulaire 6 solidarisée avec ce tronçon, c'est-à-dire par un collier présentant en demi-section axiale la forme d'un U ouvert radialement vers l'extérieur, on loge dans la gorge 7 de cette gouttière un anneau 8 mobile transversalement par rapport à ladite gouttière, avec interposition d'une cavité annulaire remplie par un coussin 9 en un matériau fluable, mais de volume global constant, l'étanchéité vis-à-vis de ce matériau étant assurée à l'aide de joints 10 pratiquement indéformables, tout au moins en leurs portions en contact avec le coussin 9, et on relie l'anneau 8, par une structure rigide 11, à un bloc d'ancrage 12 solidaire, comme le bloc 4, d'une fondation appropriée telle que le sol ou que l'ossature même du pont.

Le matériau M constitutif du coussin 9 est un liquide visqueux ou une pâte élastique ou plastique, telle qu'une gomme de silicone, ou encore une graisse susceptible de fluer ou s'écouler sous charge sans modification de son volume global.

Du fait de la liaison rigide établie entre l'anneau 8 et la fondation, on peut considérer cet anneau 8 comme fixe dans l'espace.

Si le hauban 1 est soumis à des vibrations transversales, il en est de même de la gouttière 6 solidarisée avec lui en P et cette gouttière est donc conduite à se déplacer transversalement par rapport à l'anneau fixe 8, qu'elle chevauche.

Vu la quasi indéformabilité des portions, des joints 10, en contact avec le coussin 9, les déplacements de la gouttière se traduisent par refoulement circonférentiel d'une portion, de la pâte constitutive du coussin 9, disposée dans un secteur donné de la cavité annulaire réservée entre la gouttière et l'anneau, vers le secteur diamétralement opposé de ladite cavité et inversement, au rythme des vibrations à amortir.

Ces refoulements alternatifs absorbent une énergie considérable, ce qui amortit très efficacement les vibrations considérées.

Pour monter les organes annulaires 6 et 8 sur le hauban 1, il n'est pas possible de les enfiler par le bout comme des perles, vu que les extrémités du hauban ne sont pas accessibles à cet effet.

On remédie à cet inconvénient en constituant chacun des composants annulaires de l'amortisseur par deux moitiés semi-circulaires rapportées l'une contre l'autre et solidarisées entre elles s'il en est besoin, notamment par vissage au niveau de brides radiales juxtaposées le long de parties planes axiales avec interposition de joints appropriés, pour les pièces métalliques, ou par collage le long de portées planes taillées en biseau, pour les joints.

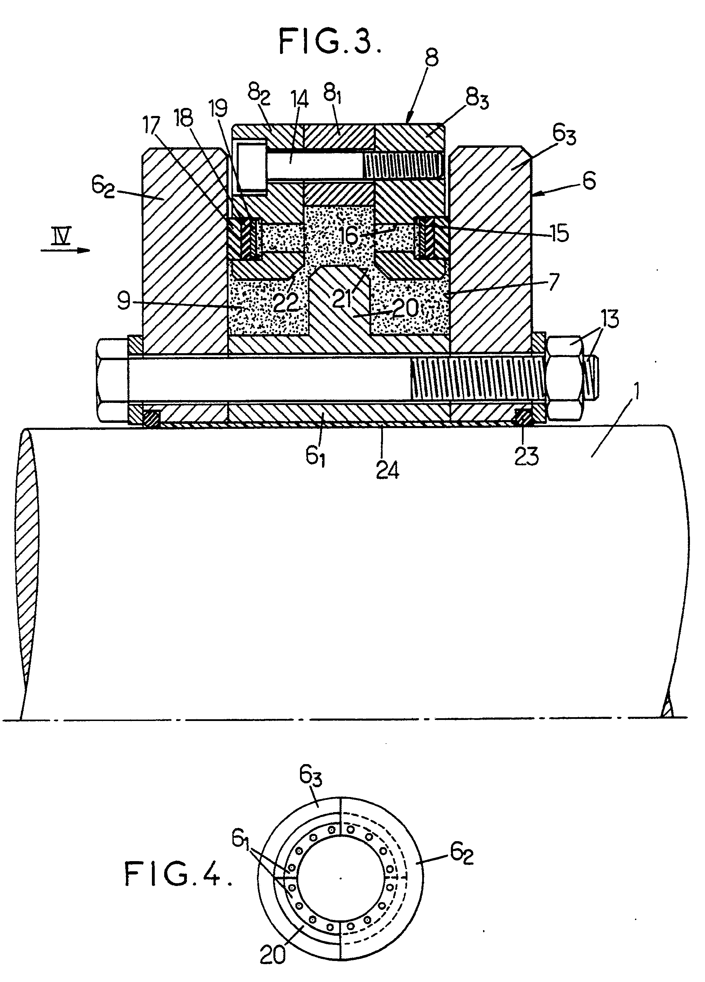

Dans un premier mode de réalisation illustré sur les figures 3 et 4, chacun des organes annulaires 6 et 8 est constitué par six éléments appelés ultérieurement moitiés. La figure 4 montrant en bout la seule gouttière 6, avec un de ses composants de gauche enlevé.

Plus précisément, chacun des deux organes annulaires 6 et 8 est constitué en trois pièces, à savoir une bague intermédiaire $6_1, 8_1$ encadrée axialement par deux disques $6_2, 6_3$ ; $8_2, 8_3$, les trois pièces de chaque élément étant assemblées entre elles à l'aide d'organes de vissage 13, 14 qui les traversent axialement de part en part.

En outre :
— chaque pièce est composée, comme indiqué ci-dessus, de deux moitiés juxtaposées le long d'un plan axial,
— et les plans de juxtaposition correspondant aux pièces axialement contiguës sont décalés angulairement autour de l'axe commun, de préférence de 90°.

Bien entendu des joints d'étanchéité appropriés (non représentés) sont prévus pour assurer l'étanchéité vis-à-vis du matériau M constitutif du coussin 9 au niveau des surfaces de juxtaposition mutuelle des moitiés des différentes pièces considérées.

La construction en trois pièces qui vient d'être décrite permet en outre de conférer à la demi-section axiale de l'anneau 8 la forme générale d'un U ouvert radialement vers l'intérieur.

Les faces extérieures des deux ailes de cet U, ailes constituées par les deux disques $8_2$ et $8_3$, sont évidées par des rainures cylindriques annulaires 15 dont les fonds communiquent avec l'intérieur de l'U par des trous axiaux 16.

Les rainures 15 sont occupées par des patins annulaires d'étanchéité eux-mêmes composés de trois rondelles superposées axialement, savoir :

— une rondelle extérieure 17 pratiquement indéformable, notamment en polytétrafluoroéthylène,

— une rondelle intermédiaire 18 en un élastomère tel qu'un caoutchouc silicone vulcanisé,

— et une rondelle intérieure 19 en métal.

Les deux premières rondelles 17 et 18 sont logées jointivement dans la rainure 15 alors qu'un petit jeu est réservé entre les faces cylindriques de cette rainure 15 et la rondelle métallique 19.

Les faces internes des deux disques $6_2$ et $6_3$ constituant les ailes de la gouttière 6 sont planes, parallèles entre elles et traitées de façon à être dures et lisses, étant notamment constituées par un revêtement chromé et poli ou par une feuille d'acier inoxydable rapportée.

Le matériau M constitutif du coussin 9 est ici injecté sous pression dans la cavité annulaire réservée entre la gouttière et l'anneau.

Vu cette pression, ledit matériau M applique fermement les patins annulaires contre les faces en regard des ailes de la gouttière.

Cette application a pour effet d'assurer une étanchéité excellente et durable vis-à-vis du matériau M entre la cavité annulaire et l'extérieur.

Il est à noter à cet égard que ladite application a pour effet d'écraser axialement chaque rondelle 18 par la rondelle métallique 19 adjacente, ce qui dilate radialement ces rondelles 18 en les appliquant contre les faces cylindriques en regard des rainures 15 qui les contiennent.

Pour augmenter le coefficient de frottement dû au glissement des patins contre les faces en regard et accroître ainsi l'amortissement désiré des vibrations du hauban, il peut être avantageux de remplacer le couple PTFE-métal poli par un autre couple tel que bronze-bronze.

Pour améliorer encore l'amortissement considéré, on peut créer des étranglements à l'intérieur de la cavité annulaire contenant le coussin 9, sur les trajets suceptibles d'être empruntés par le matériau M constitutif de ce coussin lors de ses fluages dus aux vibrations.

De tels étranglements sont par exemple créés en prévoyant autour de la portion médiane de la bague $6_1$ une collerette 20 qui fait saillie radialement en direction de l'anneau 8 en U : les arêtes de cette collerette 20 sont avantageusement chanfreinées en 21 de même que les arêtes voisines des disques $8_2$ et $8_3$ en 22, de façon à délimiter des passages tronconiques étranglés entre ces zones chanfreinées.

Pour fixer solidement la gouttière 6 sur le tronçon de hauban 1 qu'il entoure avec un très faible jeu, on délimite axialement par deux joints toriques 23 l'espace annulaire 24 de très faible épaisseur correspondant et on injecte dans cet espace un produit durcissable propre à adhérer aussi bien au collier qu'au hauban.

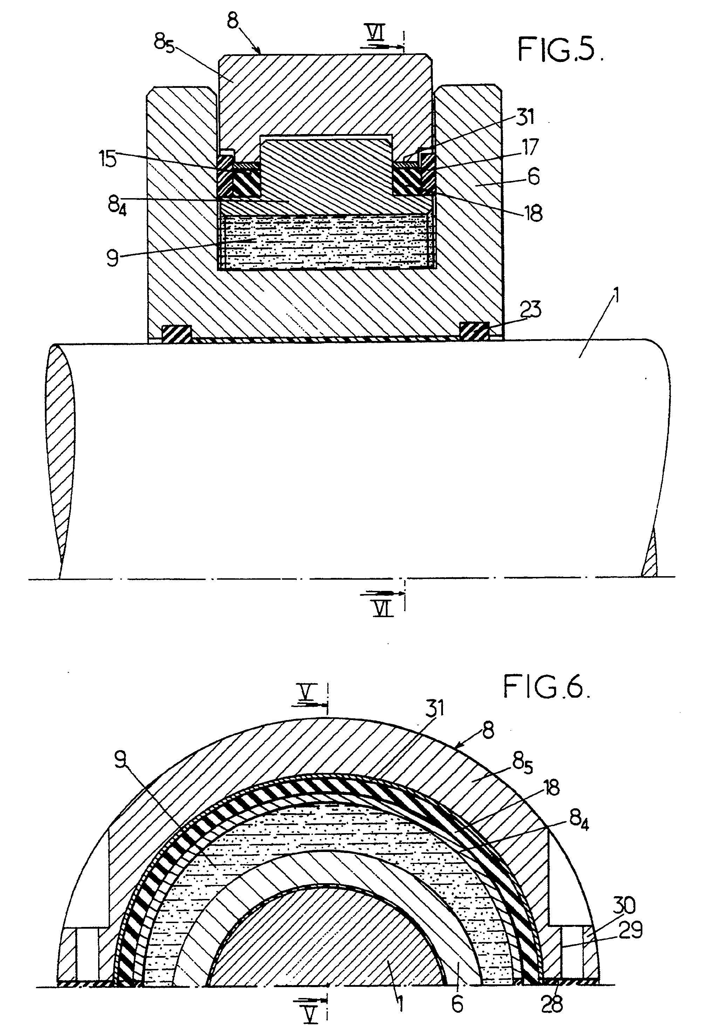

Le second mode de réalisation illustré sur les figures 5 et 6, est plus simple que celui illustré sur les figures 3 et 4.

Chacune des deux moitiés semi-circulaires composant la gouttière annulaire 6 est ici constituée en un seul bloc.

Quant à l'anneau 8, chacune de ses deux moitiés semi-circulaires est ici composée de deux éléments coaxiaux, savoir un premier élément intérieur $8_4$ et un second élément extérieur $8_5$ enveloppant le premier.

Le premier élément $8_4$ se présente sous la forme d'une tuile semi-cylindrique de révolution au milieu de laquelle fait saillie vers l'extérieur une large nervure semi-circulaire de section rectangulaire.

Le second élément $8_5$ se présente sous la forme d'une goulotte semi-circulaire ouverte vers l'intérieur et coiffant jointivement la nervure du premier élément.

Les profils des deux éléments sont choisis de façon telle qu'après mise en place du second sur le premier, des rainures annulaires 15 sont réservées entre eux dans les faces transversales de l'anneau formé.

Chaque rainure comprend :

— une portion extérieure coiffant avec jeu un joint annulaire 17 en polytétrafluoroéthylène,

— et une portion intérieure radialement plus étroite que la précédente, dans laquelle est logée sans jeu une bague 18 en matière élastomère.

Cette bague 18 est écrasée radialement lors du montage, par les demi-éléments $8_5$ extérieurs qui prennent appui sur elle lorsqu'ils sont serrés l'un contre l'autre, avec interposition de joints d'étanchéité appropriés 28 (figure 6) de façon à former l'anneau 8.

Ce serrage est par exemple effectué à l'aide de boulons (non représentés) logés dans des trous lisses 29 et filetés prévus respectivement dans des brides radiales 30 desdits éléments $8_5$.

La pression de ce serrage peut être appliquée directement par les éléments $8_5$ contre les bagues 18.

Mais elle peut également être appliquée sur ces bagues par l'intermédiaire d'arceaux métalliques 31 de répartition jouant un rôle analogue aux rondelles métalliques 19 du mode de réalisation précédent.

L'écrasement radial des bagues 18 en matériau élastomère se traduit par leur expansion axiale et celle-ci se traduit à son tour par une application axiale très ferme des joints 17 contre les parois planes transversales en regard de la gouttière 6.

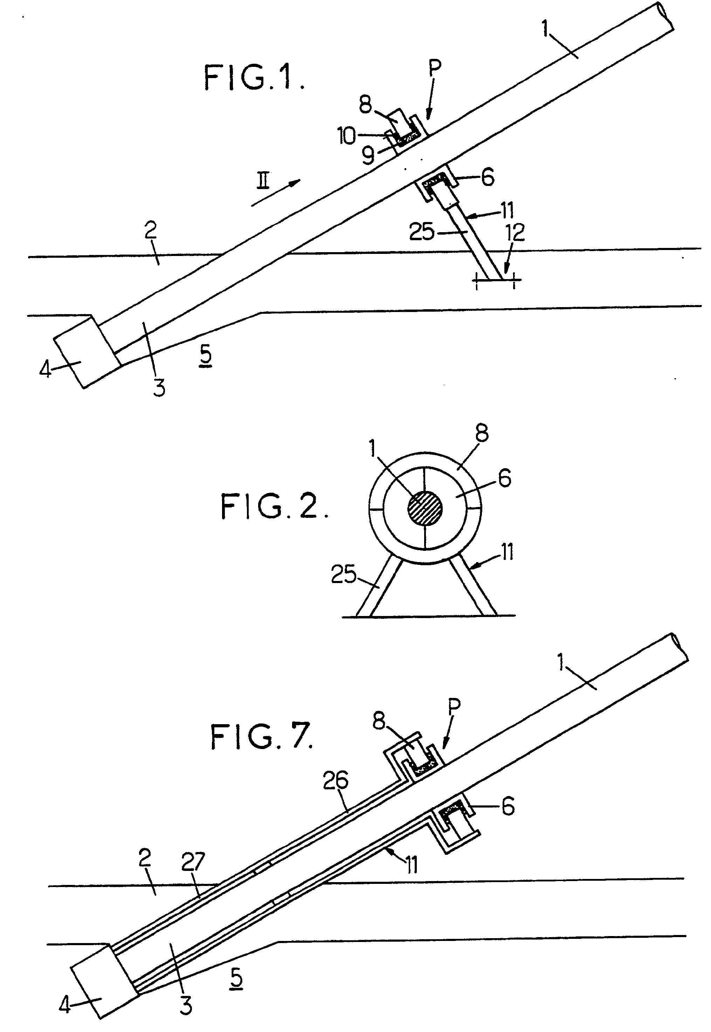

Dans le mode de réalisation schématisé sur les figures 1 et 2, la structure rigide 11 qui supporte l'anneau 8 est constituée par deux jambes de force 25 inclinées sur la verticale et symétriques l'une de l'autre par rapport au plan vertical passant par l'axe du tronçon de hauban 1 à cet endroit, la ligne moyenne de chaque jambe étant située dans le plan perpendiculaire audit axe audit endroit.

Dans le mode de réalisation schématisé sur la figure 7, la structure rigide 11 est constituée par un prolongement 26 du tube de guidage 27 parfois prévu pour entourer l'extrémité ancrée 3 du hauban 1, extrémité qui, sur une petite distance, peut être enterrée ou tout au moins noyée dans un massif approprié.

En suite de quoi, et quel que soit le mode de réalisation adopté, on obtient finalement un dispositif amortisseur de vibrations de hauban dont la constitution et le fonctionnement résultent suffisamment de ce qui précède.

Ce dispositif présente sur ceux antérieurement connus un certain nombre d'avantages et en particulier ceux de l'efficacité, de la longévité, de la résistance aux échauffements, de l'esthétique et du faible prix de revient.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
— celles où une pluralité de dispositifs amortisseurs du genre de celui décrit ci-dessus seraient montés en plusieurs points distincts du hauban 1,
— celles où les rôles respectifs de la gouttière annulaire et de l'anneau contenu dans cette gouttière seraient inversés par rapport aux modes de réalisation illustrés, en ce sens que ce serait la gouttière annulaire, alors ouverte vers l'intérieur, qui serait disposée à l'extérieur et rendue fixe dans l'espace par l'intermédiaire de la structure rigide alors que l'anneau chevauché par cette gouttière serait intérieur et solidarisé avec le hauban.

## Revendications

1. Dispositif pour amortir les vibrations d'un hauban (1) ancré à l'une au moins de ses deux extrémités dans une fondation (5), caractérisé en ce qu'il comprend un premier organe annulaire rigide (6) entourant un tronçon du hauban, disposé à proximité de la fondation et solidarisé avec ledit tronçon, un second organe annulaire rigide (8) monté sur le premier, avec formation entre eux d'une cavité annulaire (7), de façon à pouvoir se déplacer transversalement par rapport à ce premier organe annulaire, des joints d'étanchéité pratiquement indéformables (17) interposés entre les deux organes annulaires de façon à assurer l'étanchéité de la cavité annulaire vis-à-vis de l'extérieur, un coussin (9) en matériau fluable, mais de volume global constant, remplissant la cavité annulaire, et une structure rigide (11) reliant le second organe annulaire à une fondation (12).

2. Dispositif amortisseur selon la revendication 1, caractérisé en ce que le premier organe annulaire (6) est une gouttière présentant en demi-coupe axiale la forme d'un U à ailes transversales, ouvert radialement vers l'extérieur et en ce que le second organe annulaire (8) est un anneau logé dans la gorge de cette gouttière avec interposition de joints glissants (17).

3. Dispositif amortisseur selon l'une quelconque des revendications 1 et 2, caractérisé en ce que chacune des pièces annulaires (6, 8, 17) qui le constituent est formée de deux moitiés semi-circulaires assemblées l'une contre l'autre avec éventuellement interposition de joints d'étanchéité appropriés (28).

4. Dispositif amortisseur selon l'une quelconque des précédentes revendications, caractérisé en ce que les joints d'étanchéité pratiquement indéformables comprennent des patins annulaires (17) logés dans des rainures (15) elles-mêmes évidées dans les faces transversales de l'un (8) des deux organes annulaires, ces patins étant appliqués axialement contre les faces transversales en regard de l'autre organe annulaire (6), alors planes et de préférence polies.

5. Dispositif amortisseur selon les revendications 2 à 4, caractérisé en ce que l'anneau (8) est composé de deux éléments annulaires coaxiaux (84, 85) s'entourant l'un l'autre et conformés de façon à réserver entre eux les rainures latérales (15), chaque rainure présentant une portion extérieure qui reçoit avec jeu radial un patin (17) et une portion intérieure radialement plus étroite que la portion extérieure et garnie d'une bague en matériau élastomère (18) qui y est écrasée radialement entre les deux éléments annulaires (84, 85) par suite du serrage assurant la fixation mutuelle des deux moitiés constitutives de l'élément annulaire externe, cet écrasement radial de la bague se traduisant par son expansion axiale qui applique les patins (17) contre les faces en regard de la gouttière.

6. Dispositif amortisseur selon les revendications 2 à 4, caractérisé en ce que l'anneau (8) présente en demi-section axiale la forme d'un U à ailes transversales ouvert radialement vers l'intérieur, en ce que les fonds des rainures (15) sont évidés par des trous axiaux (16) qui relient ces rainures à l'intérieur de l'anneau et en ce que les patins (17) sont appliqués contre les faces en regard de la gouttière par la pression interne du matériau constitutif du coussin (9), par l'intermédiaire de successivement une rondelle intérieure (19) en métal logée radialement avec jeu dans la rainure correspondante et une bague en élastomère (18) écrasée radialement dans cette rainure.

7. Dispositif amortisseur selon l'une quelconque des précédentes revendications, caractérisé en ce que la cavité annulaire (7) réservée entre les deux organes annulaires (6 et 8) présente au moins un passage étranglé propre à entraver le fluage du matériau constitutif du coussin (9).

8. Dispositif amortisseur selon la revendication 7, caractérisé en ce que la gouttière (6) est solidaire d'une collerette (20) faisant saillie radialement sur le fond de sa gorge, au milieu de la dimension axiale de celle-ci, ladite collerette définissant avec l'anneau (8) deux passages annulaires étranglés.

**Patentansprüche**

1. Vorrichtung zum Dämpfen der Schwingungen eines an wenigstens einem seiner beiden Enden in einem Fundament (5) verankerten Abspannseils (1), **dadurch gekennzeichnet**, daß sie ein einen Abschnitt des Abspannseils umgebendes erstes ringförmiges festes Element (6), das in der Nähe des Fundaments angeordnet und mit dem Abschnitt fest verbunden ist, ein zweites ringförmiges festes Element (8), das auf das erste unter Bildung eines ringförmigen Hohlraumes (7) zwischen ihnen derart aufgebracht ist, daß es sich gegenüber dem ersten ringförmigen Element transversal bewegen kann, im wesentlichen unverformbare Dichtringe (17), die zwischen den beiden ringförmigen Elementen derart eingebracht sind, daß die Dichtheit des ringförmigen Hohlraums nach außen hin gewährleistet ist, ein Kissen (9) aus plastischem Material mit konstantem Gesamtvolumen, das den ringförmigen Hohlraum ausfüllt, und ein steifes Element (11), das das zweite ringförmige Element mit einem Fundament (12) verbindet, aufweist.

2. Dämpfungsvorrichtung nach Anspruch 1, **dadurch gekennzeichnet**, daß das erste ringförmige Element (6) eine Rinne ist, die in axialem Halbschnitt die Form eines U mit nach außen geöffneten transversalen Flügeln aufweist, und daß das zweite ringförmige Element (8) ein in der Vertiefung der Rinne unter Einfügung von Gleitdichtungen (17) angeordneter Ring ist.

3. Dämpfungsvorrichtung nach Anspruch 1 oder 2, **dadurch gekennzeichnet**, daß jedes der diese bildenden ringförmigen Teile (6, 8, 17) aus zwei halbkreisförmigen Hälften gebildet ist, die, unter eventueller Einfügung von geeigneten Dichtringen (28), jeweils miteinander verbunden sind.

4. Dämpfungsvorrichtung nach einem der vorangehenden Ansprüche, **dadurch gekennzeichnet**, daß die im wesentlichen unverformbaren Dichtringe ringförmige Gleitschienen (17) aufweisen, die in Vertiefungen (15) gelagert sind, die ihrerseits wiederum in die Querflächen eines (8) der beiden ringförmigen Elemente eingebracht sind, wobei die Gleitschienen axial gegen die dem anderen ringförmigen Element (6) gegenüberliegenden, planen, und vorzugsweise polierten Querflächen gedrückt sind.

5. Dämpfungsvorrichtung nach den Ansprüchen 2 bis 4, **dadurch gekennzeichnet**, daß der Ring (8) aus zwei ringförmigen koaxialen Elementen ($8_4$, $8_5$), die sich einander umgeben und so angepaßt sind, daß zwischen ihnen die seitlichen Vertiefungen (15) frei bleiben, gebildet ist, wobei jede Vertiefung einen äußeren Abschnitt, der mit radialem Spiel eine Gleitschiene (17) aufnimmt, und einen inneren Abschnitt, der radial enger ist als der äußere Abschnitt und mit einem Ring (18) aus elastomerem Material versehen ist, der aufgrund der die gegenseitige Befestigung der beiden Hälften, die das äußere ringförmige Element bilden, sicherstellenden Pressung radial zwischen den beiden ringförmigen Elementen ($8_4$, $8_5$) radial eingequetscht ist, wobei die radiale Quetschung des Rings in dessen axiale Ausdehnung umgesetzt ist, die die Gleitschienen (17) gegen die der Rinne gegenüberliegende Flächen drückt.

6. Dämpfungsvorrichtung nach den Ansprüchen 2 bis 4, **dadurch gekennzeichnet**, daß der Ring (8) in axialem Halbschnitt die Form eines U mit radial nach innen geöffneten transversalen Flügeln darstellt, daß die Bögen der Vertiefungen (15) mit axialen Löchern (16) versehen sind, die diese Vertiefungen mit dem Inneren des Rings verbinden, und daß die Gleitschienen (17) durch den inneren Druck des das Kissen (9) bildenden Materials aufeinanderfolgend mittels einer inneren Metallscheibe (19), die mit Spiel radial in der dazugehörenden Vertiefung gelagert ist, und eines Elastomerrings (18), der radial in diese Vertiefung gequetscht ist, gegen die den Rinnen gegenüberliegenden Flächen gedrückt sind.

7. Dämpfungsvorrichtung nach einem der vorangehenden Ansprüche, **dadurch gekennzeichnet**, daß der zwischen den beiden ringförmigen Elementen (6 und 8) freigehaltene ringförmige Raum (7) wenigstens einen verengten Durchgang aufweist, der das plastische Fließen des das Kissen (9) bildenden Materials behindert.

8. Dämpfungsvorrichtung nach Anspruch 7, **dadurch gekennzeichnet**, daß die Rinne (6) mit einem radial auf dem Boden ihrer Vertiefung und in der Mitte der axialen Abmessung derselben aufsitzenden Kragen (20), der mit dem Ring (8) zwei eingeengte, ringförmige Durchgänge begrenzt, fest verbunden ist.

## Claims

1. Device for damping the vibrations of a stay cable (1) anchored at one at least of their ends in a foundation (5), **characterized in that** it comprises a first rigid annular member (6) surrounding a section, of the cable, disposed in the vicinity of the foundation and fast with said section, a second rigid annular member (8) mounted on the first one, with formation therebetween of an annular cavity (7) so as to be able to move transversely with respect to this first annular member, seals (7) which are practically undistortable interposed between the two annular members so as to seal the annular cavity with respect to the outside, a cushion (9) made from a flowable material, but of constant overall volume, filling the annular cavity, and a rigid structure (11) connecting the second annular member to a foundation (12).

2. Damping device according to claim 1, **characterized in that** the first annular member (6) is a gutter having in axial half section a radially outwardly open U-shape with transverse wings and the second annular member (8) is an annulus housed in the groove of this gutter and with sliding seals (17) being interposed.

3. Damping device according to any of claims 1 and 2, **characterized in that** each of the annular members (6, 8, 17) is formed of two semicircular halves assembled together with appropriate seals (28) being interposed if required.

4. Damping device according to any one of the foregoing claims, characterized in that the seals which are practically undistortable comprise annular shoes (17) housed in grooves (15) themselves formed in the transverse faces of one (8) of the two annular members, these shoes being applied axially against the transverse faces facing the other annular member (b), then flat and preferably polished.

5. Damping device according to claims 2 to 4, **characterized in that** the annulus (8) is formed of two coaxial annular elements ($8_4$, $8_5$) surrounding each other and formed so as to provide the lateral grooves (15) therebetween, each groove having an external portion which receives, with radial play, a shoe (17) and an internal portion radially narrower than the external portion and equipped with an elastomer ring (18) which is crushed radially between the two annular elements ($8_4$, $8_5$) following clamping providing mutual fixing of the two halves forming the external annular element, such radial crushing of the ring resulting in its axial expansion which applies the shoes (17) against the facing faces of the gutter.

6. Damping device according to claims 2 to 4, **characterized in that** the annulus (8) has, in axial half section, the shape of a radially inwardly open U with transverse wings, the bottoms of the grooves (15) are formed with axial holes (16) which connect these grooves to the inside of the annulus and the shoes (17) are applied against the facing faces of the gutter by the internal pressure of the material forming the cushion (9) via successively an internal metal washer (9) housed radially with play in the corresponding groove and an elastomer ring (18) crushed radially in this groove.

7. Damping device according to any one of the foregoing claims, **characterized in that** the annular cavity (7) formed between the two annular members (6 and 8) has at least one restricted passage for hindering the flow of material forming the cushion (9).

8. Damping device according to claim 7, **characterized in that** the gutter (6) is integral with a collar (20) radially projecting from the bottom of its groove in the middle of the axial dimension thereof, said collar defining together with annulus (8) two annular restricted passages.

FIG.1.

FIG.2.

FIG.7.

# FIG.3.

# FIG.4.

FIG.5.

FIG.6.